**Europäisches Patentamt**

(19) **European Patent Office**

**Office européen des brevets**

(11) Veröffentlichungsnummer: **0 269 647**
**B1**

(12) **EUROPÄISCHE PATENTSCHRIFT**

(45) Veröffentlichungstag der Patentschrift: **12.09.90**

(51) Int. Cl.⁵: **F 16 C 17/03**

(21) Anmeldenummer: **87902409.9**

(22) Anmeldetag: **28.04.87**

(86) Internationale Anmeldenummer:
**PCT/DE87/00187**

(87) Internationale Veröffentlichungsnummer:
**WO 87/07341 03.12.87 Gazette 87/27**

(54) HYDRODYNAMISCHES RADIALGLEITLAGER.

(30) Priorität: **23.05.86 DE 3617289**

(43) Veröffentlichungstag der Anmeldung:
**08.06.88 Patentblatt 88/23**

(45) Bekanntmachung des Hinweises auf die
Patenterteilung:
**12.09.90 Patentblatt 90/37**

(84) Benannte Vertragsstaaten:
**AT BE CH DE FR GB IT LI SE**

(56) Entgegenhaltungen:
**DE-A-3 414 910**
**DE-A-3 426 559**
**FR-A-1 450 715**
**FR-A-1 492 819**
**FR-A-1 506 849**
**US-A-3 351 394**
**US-A-3 589 782**
**US-A-3 905 250**

(73) Patentinhaber: **Braunschweiger Hüttenwerk GmbH**
**Alte Leipziger Strasse 117-118**
**D-3300 Braunschweig (DE)**

(72) Erfinder: **GERLING, Paul**
**Hafenstrasse 18**
**D-4200 Oberhausen 12 (DE)**

Courier Press, Leamington Spa, England.

**Beschreibung**

Die Erfindung bezieht sich gattungsgemäß auf ein hydrodynamisches Radialgleitlager, — mit Lagergehäuse, zylindrischer Kippsegmentaufnahme, in die Kippsegmentaufnahme eingesetzten, über deren Umfang verteilten Kippsegmenten und Schmiermittelzuführungseinrichtung mit Schmiermittelzuführungsöffnungen in der Kippsegmentaufnahme, wobei die Kippsegmente wellenseitig eine Gleitfläche mit Schmiermittelzuführungsquernut an dem der Laufrichtung der Welle entgegengesetzten Rand ihrer Gleitfläche und rückseitig eine Kippausformung aufweisen, deren Radialschnitt dem Ausschnitt eines Kreises mit gegenüber dem Radius der zylinderischen Kippsegmentaufnahme reduziertem Radius entspricht, wobei außerdem die Kippsegmente beidseits der Kippausformung gegenüber der zylindrischen Kippsegmentaufnahme einen Spaltraum bilden, der nach Maßgabe der Kippausformung, d.h. in einer radial nach außen gerichteten Projektion gleichsam unter der Kippausformung sich über die gesamte Breite der einzelnen Kippsegmente erstrecken kann oder nur bereichsweise, beispielsweise im mittleren Bereich der Breite der Kippsegmente, angeordnet sein kann. — Ein solches Radialgleitlager muß einerseits die Wellendynamik bzw. die Dynamik eines mit der Welle verbundenen Rotors beherrschen und andererseits verlustarm arbeiten. Zur Wellendynamik gehören die mit der Biegeschwingung bzw. den kritischen Drehzahlen verbundenen Schwingungsamplituden der Welle und/oder des Rotors. Diese Schwingungserscheinungen gilt es zu dämpfen. Die Verluste resultieren aus der Schmiermittelreibung nicht nur in den Gleitspalten, die die Gleitflächen der Kippsegmente mit der Oberfläche der Welle bilden, sondern auch in den Kippsegmentzwischenräumen.

Bei der bekannten gattungsgemäßen Ausführungsform (DE-A-3 414 910) sind die Spalte am Segmentrücken über ihre gesamte Länge in der beschriebenen Weise keilförmig. Die Schmiermittelzuführungskanäle verlaufen in den Kippsegmenten mehr oder weniger radial und befinden sich im Bereich der Segmentabstützung. Von dort aus wird das Schmiermittel den Schmierspalten zugeführt. Das hat zur Folge, daß bei arbeitendem Radialgleitlager über die Spalträume Schmiermittel austritt, welches in den Spalträumen zur Dämpfung der eingangs beschriebenen Schwingungen kaum beiträgt. Die Dämpfung erfolgt praktisch ausschließlich in der Schmiermittelschicht und ist bei gattungsgemäßen Radialgleitlagern verbesserungsbedürftig. Das Schmiermittel gelangt in die Kippsegmentzwischenräume und trägt durch Verwirbelung und dadurch bedingter innerer Reibung in erheblichem Maße zu einerseits Verlustleistung, andererseits Ölverlusten bei.

Der Erfindung liegt die Aufgabe zugrunde, ein gattungsgemäßes Radialgleitlager so weiter auszubilden, daß ohne zusätzliche Bauteile eine sehr ausgeprägte Dämpfung der beschriebenen Schwingungen erfolgt und die Ölverluste sowie Verlustleistung reduziert werden.

Zur Lösung dieser Aufgabe lehrtdie Erfindung, daß die Spalträume der Kippsegmente zumindest an dem der Laufrichtung der Welle entgegengesetzten keilförmigen, durch die Kippausformung gebildeten Bereichen eine Verlängerung, nämlich einen Dämpfungsspaltbereich aufweisen, der einerseits durch einen Flächenbereich der zylindrischen Kippsegmentaufnahme, andererseits durch einen dazu konzentrischen Rückenflächenbereich des Kippsegmentes gebildet ist, und daß die Schmiermittelzuführungseinrichtung einen Segmentkanal aufweist, der von der Schmiermittelzuführungsquernut schräg zur Kippausformung und zu der dort angeordneten, zugeordneten Schmiermittelzuführungsöffnung in der Kippsegmentaufnahme führt. — Die Erfindung geht von der Erkenntnis aus, daß die Spalträume unter den Kippsegmenten in erheblichem Maße zur Reduzierung der Ölverluste und Verlustleistung sowie zur Schwingungsdämpfung beitragen können, wenn Sie Bereiche aufweisen, die nicht keilförmig erweitert, sondern als Dämpfungsspaltbereiche geringer Spaltdicke ausgeführt sind. Das erreicht man, wenn man Dämpfungsspaltbereiche bildet, die einerseits durch einen Flächenbereich der zylindrischen Kippsegmentaufnahme, andererseits durch einen dazu konzentrischen Rückenflächenbereich des ungekippt betrachteten Kippsegmentes gebildet sind und wenn man dafür Sorge trägt, daß außerdem dieser Dämpfungsspaltbereich hinreichend lang ist. Dazu gehört, daß die Schmiermittelzuführungseinrichtung die beschriebenen, schräg geführten Segmentkanäle aufweist, so daß in die Kippsegmentzwischenräume kein Schmiermittel eindringen kann. Es versteht sich, daß man die Dicke der Dämpfungsspaltbereiche und deren Länge den speziellen Verhältnissen anpassen muß, wobei auf den Kippfreiheitsgrad der Kippsegmente Rücksicht zu nehmen ist. Man wird die Dicke der Dämpfungsspaltbereiche so gering wie möglich machen, andererseits die Dämpfungsspaltbereiche in Umfangsrichtung so lang wie möglich erstrecken. Eine bevorzugte und bewährte Ausführungsform der Erfindung mit beidseits der keilförmigen, durch die Kippsegmentausformung gebildeten Bereiche angeordneten, Dämpfungsspaltbereichen ist dadurch gekennzeichnet, daß der der Laufrichtung der Welle entgegengesetzte Dämpfungsspaltbereich um ein Mehrfaches länger ist als der in Laufrichtung liegende Bereich, weil dieser Bereich in stärkerem Maße als der in Laufrichtung liegende Bereich zur Dämpfung der beschriebenen Schwingungen beitragen kann. Handelt es sich um Radialgleitlager mit einem Radius von 5 bis 10 cm, so empfiehlt es sich die Auslegung so zu treffen, daß die Dämpfungsspaltbereiche, bei ungekippten Kippsegmenten als Parallelspalte ausgebildet sind und eine Spaltdicke aufweisen, die maximal von 2 %, vorzugsweise weniger als 1 %, vom Gleitflächenradius der Kippsegmente ausmacht. Damit die Schmiermittelzuführung den bei erfindungsgemäßen Radialgleitlagern auftretenden Anforderungen genügt, empfiehlt die Erfindung, daß der Segmentkanal einen über die Breite der Kippsegmente erstreckten schlitzförmigen Querschnitt aufweist und in eine Mehrzahl von Schmiermittelaustrittsbohrungen ausläuft, die in die Schmiermittelzuführungsquernut einmünden, und daß die Schmiermittelzuführungsöffnung dem Querschnitt des Segmentkanals angepaßt ist.

Bei einem hydrodynamischen Radialgleitlager des beschriebenen Aufbaus erfahren die Kippsegmente erhebliche mechanische Beanspruchungen. Dazu gehören auch Biegemomente mit einer mehr oder weniger mit der Radialgleitlagerachse zusammenfallenden Biegemomentachse. Um nichtsdestoweniger sicherzustellen, daß das Radialgleitlager mit definierten Verhältnissen in bezug auf die Dämpfungsspaltbereiche und in bezug auf die Schmiermittelschicht auf den Gleitflächen arbeitet, ist eine bevorzugte Ausführungsform der Erfindung, der selbständige Bedeutung zukommt (in Kombination zu den übrigen, vorstehend behandelten Merkmalen) dadurch gekennzeichnet, daß die Kippausformung und das Kippsegment jeweils als einheitliches Bauteil geformt sind. Die so aufgebauten Kippsegmente haben in bezug auf die aufzunehmenden mechanischen Beanspruchungen ein sehr großes Widerstandsmoment und folglich auch eine entsprechende Biegesteifigkeit. Hinzu kommt, daß in diesem Fall auf den Einsatz zusätzlicher Bauteile verzichtet wird. Dadurch lassen sich besonders kleine Lager mit einer direkten Schmiermittelüberleitung verwirklichen. Wo die mechanischen Beanspruchungen weniger groß sind, kann aber auch in an sich bekannter Weise die Kippausformung an einem besonderen Bauteil ausgeformt sein, welches in eine entsprechende Aufnahme im Rücken der Kippsegmente eingesetzt ist.

Die erreichten Vorteile sind darin zu sehen, daß bei einem erfindungsgemäßen Radialgleitlager eine sehr ausgeprägte Dämpfung der eingangs beschriebenen Schwingungen erreicht wird, weil diese Dämpfung nicht nur in der Schmiermittelschicht über der Gleitfläche, sondern auch in den Spalträumen unter den Kippsegmenten erfolgt, die entsprechend ausgebildet sind. Hinzu kommt, daß bei dieser Ausbildung der Spalträume zu Dämpfungsspaltbereichen der Schmiermittelaustritt über die Dämpfungsspaltbereiche reduziert wird, so daß die Ölmenge, die sich in den Kippsegmentzwischenräumen ansammelt, verhältnismäßig gering ist und zu den vorstehend beschriebenen Verlusten praktisch nicht mehr beiträgt. Folglich wurden die Ölverluste und die Verlustleistung reduziert. Das erfindungsgemäße Radialgleitlager arbeitet daher in beachtlichem Maße verlustarm. Es versteht sich, daß das Lagergehäuse stirnseitig offen ist, so daß das Schmiermittel wie üblich abfließen kann. Darüber hinaus ist die Forderung nach guter Kippbeweglichkeit der Kippsegmente einerseits und nach geringer Spalthöhe im Bereich des Ölübertritts vom Lagergehäuse zu den Kippsegmenten erfüllt.

Im folgenden wird die Erfindung anhand einer lediglich ein Ausführungsbeispiel darstellenden Zeichnung ausführlicher erläutert. Es zeigen in schematischer Darstellung

Fig. 1 einen orthogonal zur Achse geführten Schnitt durch ein erfindungsgemäßes Radialgleitlager,

Fig. 2 einen Querschnitt durch den Gegenstand nach Fig. 1,

Fig. 3 eine Ansicht des Kippsegmentes aus dem Gegenstand nach Fig. 1 aus Richtung des Pfeiles A ausschnittsweise und

Fig. 4 in gegenüber den Fig. 1 bis 3 wesentlich vergrößertem Maßstab die Ansicht eines Kippsegmentes aus einem erfindungsgemäßen Radialgleitlager.

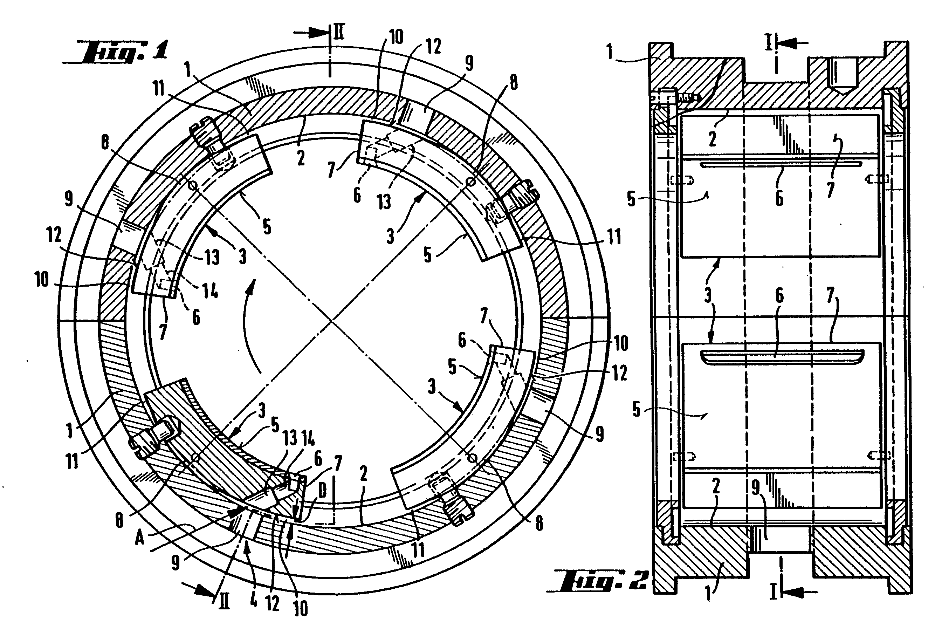

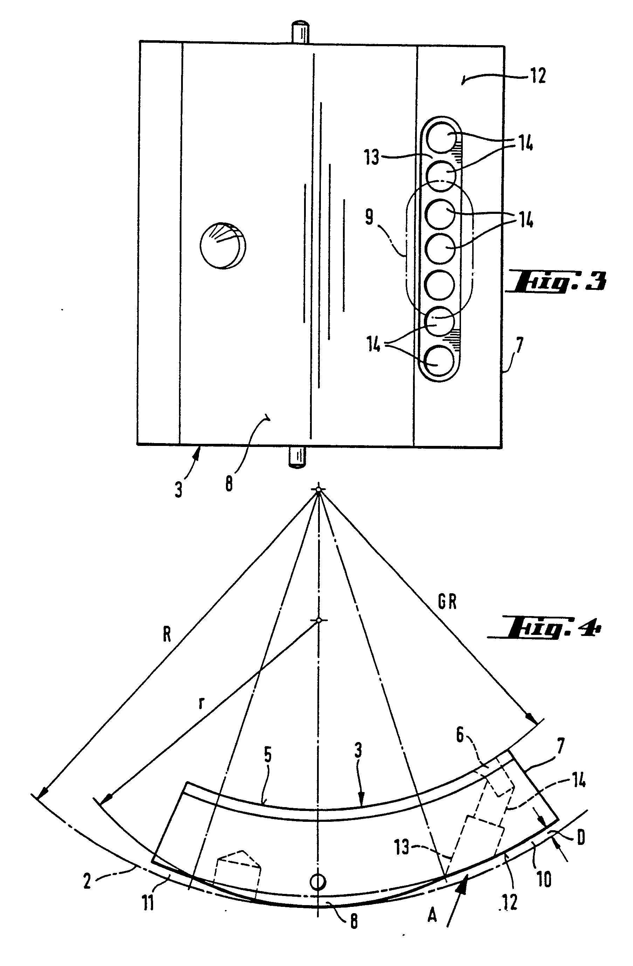

Das in den Figuren 1 bis 3 dargestellte hydrodynamische Radialgleitlager besteht in seinem grundsätzlichen Aufbau aus einem Lagergehäuse 1 einer zylindrischen Kippsegmentaufnahme 2, einer Mehrzahl von in die Kippsegmentaufnahme 2 eingesetzten, über deren Umfang verteilten Kippsegmenten 3 und einer Schmiermittelzuführungseinrichtung 4.

Die Kippsegmente 3 besitzen wellenseitig, wie üblich, eine Gleitfläche 5 mit Schmiermittelzuführungsquernut 6 an dem der Laufrichtung der Welle entgegengesetzten Rand 7 der Gleitfläche 5 und rückenseitig eine Kippausformung 8. Wie insbesondere die Fig. 1 erkennen läßt, ist den Schmiermittelzuführungsquernuten 6 jeweils eine Schmiermittelzuführungsöffnung 9 zugeordnet. Der Radialschnitt der Kippausformung 8 entspricht dem Ausschnitt eines Kreises mit gegenüber dem Radius R der zylindrischen Kippsegmentaufnahme 2 reduziertem Radius r. Dazu wird auch auf die Figur 4 verwiesen. Diese Gestaltung führt dazu, daß die Kippsegmente 3 beidseits der Kippausformung 8 gegenüber der zylindrischen Kippsegmentaufnahme 2 einen Spaltraum 10, 11 bilden, der nach Maßgabe der Kippausformung 8, d.h. in einer nach außen gerichteten radialen Projektion gleichsam unter der Kippausformung 8, keilförmig enger wird. Aus einer vergleichenden Betrachtung der Fig. 1 und 4 entnimmt man, daß die Spalträume 10, 11 der Kippsegmente 3 zumindest an dem der Laufrichtung der Welle entgegengesetzten keilförmigen, durch die Kippausformung 8 gebildeten Bereich eine Verlängerung, nämlich einen Dämpfungsspaltbereich 10 aufweisen. Dieser Dämpfungsspaltbereich 10 ist einerseits durch einen Flächenbereich ser zylindrischen Kippsegmentaufnahme 2, andererseits durch einen dazu konzentrischen Rückenflächenbereich 12 des insoweit ungekippt betrachteten Kippsegmentes 3 gebildet. Damit der Strömungsweg des Schmiermittels in diesen Dämpfungsspaltbereichen 10 möglichst lang ist, wie die Figur 1 zeigt, ist die Anordnung so getroffen, daß sie mittels Schmiermittelzuführungseinrichtung 4 einen Segmentkanal 13 aufweist, der von der Schmiermittelzuführungsquernut 6 schräg zur Kippausformung 8 und zu einer angeordneten Schmiermittelzuführungsöffnung 9 in der zylindrischen Kippsementaufnahme 2 führt. In Figur 1 wurde dargestellt, daß der der Laufrichtung der Welle entgegengesetzte Dämpfungsspaltbereich 10 um ein Mehrfaches länger ist als der in Laufrichtung liegende Bereich 11. Es versteht sich, daß die Dämpfungsspaltbereiche 10, 11 in den Figuren aus darstellungstechnischen Gründen übertrieben groß gezeichnet sind. In der Praxis ist die Anordnung im allgemeinen so getroffen, daß die Dämpfungsspaltbereiche 10, 11 bei ungekippten Kippsegmenten 3 betrachtet, eine maximale Spaltdicke D aufweisen, die etwa 2 % vom Gleitflächenradius GR der Kippsegmente 3 ausmacht.

Die Ölzuführung ist bei dem beschriebenen Radialgleitlager dadurch sichergestellt, daß der Segmentkanal 13 einen über die Breite der Kippsegmente 3 erstreckten schlitzförmigen Querschnitt aufweist und in eine Mehrzahl von Schmiermittelaustrittsbohrungen 14 ausläuft. Dazu wird insbesondere auf die Figur 3 verwiesen. Die Schmiermittelaustrittsbohrungen 14 münden in der Schmiermittelzuführungsquernut 6. Es versteht sich, daß die Schmiermittelzuführungsöffnung 9 dem Querschnitt des Segmentkanals 13 angepaßt ist.

Bei der dargestellten Ausführungsform besitzen die Kippsegmente 3 ein sehr großes Widerstandsmoment. Sie sind insoweit sehr biegesteif gestaltet. Das erreicht man dadurch, daß die Kippausformungen 8 und das Kippsegment 3 jeweils ein einheitliches Bauteil darstellen.

## Patentansprüche

1. Hydrodynamisches Radialgleitlager, -mit Lagergehäuse (1),
zylindrischer Kippsegmentaufnahme (2),
in die Kippsegmentaufnahme (2) eingesetzten, über deren Umfang verteilten Kippsegmenten (3) und
Schmiermittelzuführungseinrichtung (4) mit Schmiermittelzuführungsöffnungen (9) in der Kippsegmentaufnahme (2),
wobei die Kippsegmente (3) wellenseitig eine Gleitfläche (5) mit Schmiermittelzuführungsquernut (6) an dem der Laufrichtung der Welle entgegengesetzten Rand ihrer Gleitfläche (5) und rückseitig eine Kippausformung (8) aufweisen, deren Radialschnitt dem Ausschnitt eines Kreises mit gegenüber dem Radius der zylindrischen Kippsegmentaufnahme (2) reduziertem Radius entspricht, wobei außerdem die Kippsegmente (3) beidseits der Kippausformung (8) gegenüber der zylindrischen Kippsegmentaufnahme (2) einen Spaltraum (10, 11) bilden, der nach Maßgabe der Kippausformung (8) keilförmig enger wird, dadurch gekennzeichnet, daß die Spalträume (10, 11) der Kippsegmente (3) zumindest an dem der Laufrichtung der Welle entgegengesetzten keilförmigen, durch die Kippausformung gebildeten Bereich eine Verlängerung, nämlich einen Dämpfungsspaltbereich (10) aufweisen,
der einerseits durch einen Flächenbereich der zylindrischen Kippsegmentaufnahme (2), andererseits durch einen dazu konzentrischen Rückenflächenbereich (12) des Kippsegmentes (3) gebildet ist.
und daß die Schmiermittelzuführungseinrichtung (4) einen Segmentkanal (13) aufweist, der von der Schmiermittelzuführungsquernut (6) schräg zur Kippausformung (8) und zu der dort angeordneten, zugeordneten Schmiermittelzuführungsöffnung (9) in der Kippsegmentaufnahme (2) führt.

2. Radialgleitlager nach Anspruch 1 mit beidseits der keilförmigen, durch die Kippausformung gebildeten Bereiche angeordneten Dämpfungsspaltbereichen, dadurch gekennzeichnet, daß der der Laufrichtung der Welle entgegengesetzte Dämpfungsspaltbereich (10) um ein Mehrfaches länger ist als der in Laufrichtung liegende Dämpfungsspaltbereich (11).

3. Radialgleitlager nach einem der Ansprüche 1 oder 2, dadurch gekennzeichnet, daß die Dämpfungsspaltbereiche (10, 11) als Parallelspalte ausgebildet sind und eine Spaltdicke (D) aufweisen, die maximal 2 %, vorzugsweise weniger als 1 %, vom Gleitflächenradius (GR) der Kippsegmente (3) ausmacht.

4. Radialgleitlager nach einem der Ansprüche 1 bis 3, dadurch gekennzeichnet, daß der Segmentkanal (13) einen über die Breite der Kippsegmente (3) erstreckten schlitzförmigen Querschnitt aufweist und in eine Mehrzahl von Schmiermittelaustrittsbohrungen (14) ausläuft, die in die Schmiermittelzuführungsquernut (6) einmünden, und daß die Schmiermittelzuführungsöffnung (9) dem Querschnitt des Segmentkanals (13) angepaßt ist.

5. Radialgleitlager nach einem der Ansprüche 1 bis 4, dadurch gekennzeichnet, daß die Kippausformungen (8) und das Kippsegment (3) als einheitliches Bauteil geformt sind.

## Revendications

1. Palier hydraulique à glissement radial, comprenant
un carter (1),
un logement cylindrique (2) à segments basculants, des segments basculants (3) intégrés dans le logement (2), et répartis sur le pourtour de celui-ci, et un dispositif (4) d'alimentation en fluide lubrifiant qui comporte, dans le logement (2) des segments basculants, des orifices (9) d'admission de fluide lubrifiant,
les segments basculants (3) comprenant, côté arbre, une surface de glissement (5) avec une rainure transversale (6) d'admission de fluide lubrifiant sur le bord de leur surface de glissement (5) qui fait face au sens de rotation de l'arbre et, côté postérieur, une protubérance de basculement (8) dont la coupe radiale correspond au fragment d'une circonférence présentant un rayon réduit par rapport au rayon du logement cylindrique (2) des segments basculants, les segments basculants (3) formant en outre de part et d'autre de la protubérance de basculement (8), par rapport au logement cylindrique (2), un interstice (10, 11) à rétrécissement cunéiforme en fonction de la protubérance de basculement (8), caractérisé par le fait que les interstices (10, 11) des segments basculants (3) présentent, au moins dans la région cunéiforme tournée à l'opposé du sens de rotation de l'arbre, et formée par la protubérance de basculement, un prolongement, c'est-à-dire une zone interstitielle d'amortissement (10)

qui est formée, d'une part, par une région superficielle du logement cylindrique (2) des segments basculants et, d'autre part, par une région superficielle postérieure (12) du segment basculant (3), concentrique à la région précitée;

et par le fait que le dispositif (4) d'alimentation en fluide lubrifiant comporte un canal segmentaire (13) qui s'étend à l'oblique, à partir de la rainure transversale (6) d'admission de fluide lubrifiant, jusqu'à la protubérance de basculement (8) et jusqu'à l'orifice associé (9) d'admission de fluide lubrifiant, pratiqué dans le logement (2) des segments basculants et situé dans cette zone.

2. Palier à glissement radial selon la revendication 1, comportant des zones interstitielles d'amortissement disposées de part et d'autre des régions cunéiformes, formées par la protubérance de basculement, caractérisé par le fait que la zone interstitielle d'amortissement (10), tournée à l'opposé du sens de rotation de l'arbre, est plusieurs fois plus longue que la zone interstitielle d'amortissement (11) située dans le sens de rotation.

3. Palier à glissement radial selon l'une des revendications 1 ou 2, caractérisé par le fait que les zones interstitielles d'amortissement (10, 11) sont réalisées sous la forme d'interstices parallèles, et présentent une épaisseur d'interstice (D) qui représente au maximum 2 %, de préférence moins de 1 % du rayon (GR) de la surface de glissement des segments basculants (3).

4. Palier à glissement radial selon l'une des revendications 1 à 3, caractérisé par le fait que le canal segmentaire (13) présente une section transversale en forme de fente, s'étendant sur la largeur des segments basculants (3), et s'achève par de multiples perçages (14) de sortie du fluide lubrifiant, qui débouchent dans la rainure transversale (6) d'admission de fluide lubrifiant; et par le fait que l'orifice (9) d'admission de fluide lubrifiant est adapté à la section transversale du canal segmentaire (13).

5. Palier à glissement radial selon l'une des revendications 1 à 4, caractérisé par le fait que les protubérances de basculement (8) et le segment basculant (3) sont réalisés sous la forme d'une pièce constitutive unitaire.

**Claims**

1. A hydrodynamic radial sliding bearing comprising:
   a bearing housing (1),
   a cylindrical tilting segment mounting means (2), tilting segments (3) which are fitted into the tilting segment mounting means (2) and which are distributed over the periphery thereof, and
   a lubricant feed means (4) with lubricant feed openings (9) in the tilting segment receiving means (2), wherein the tilting segments (3) at the shaft side have a sliding bearing surface (5) with transverse lubricant feed groove (6) at the edge of their sliding bearing surface (5) which is in opposite relationship to the direction of movement of the shaft while at the rear side the tilting segments (3) have a tilting projection portion (8) whose radial section corresponds to the section of a circle with a radius which is reduced relative to the radius of the cylindrical tilting segment mounting means (2), wherein in addition on both sides of the tilting projection portion (8) the tilting segments (3) form with respect to the cylindrical tilting segment mounting means (2) a gap which becomes narrower in a wedge-like configuration in accordance with the configuration of the tilting projection portion (8), characterised in that at least at the wedge-shaped region which is in opposite relationship to the direction of movement of the shaft and which is formed by the tilting projection portion, the gaps (10, 11) of the tilting segments (3) have an extension portion, namely a damping gap region (10),

   which is formed on the one hand by a surface portion of the cylindrical tilting segment mounting means (2) and on the other hand by a rear surface portion (12), which is concentric with respect thereto, of the tilting segment (3),

   and that the lubricant feed means (4) has a segment passage (13) which leads from the transverse lubricant feed groove (6) inclinedly to the tilting projection portion (8) and to the associated lubricant feed opening (9) arranged at that location in the tilting segment mounting means (2).

2. A radial sliding bearing according to claim 1 with damping gap regions arranged on both sides of the wedge-shaped regions formed by the tilting projection portion, characterised in that the damping gap region (10) which is in opposite relationship to the direction of movement of the shaft is longer by a multiple than the damping gap region (11) which is disposed in the direction of movement of the shaft.

3. A radial sliding bearing according to one of claims 1 and 2 characterised in that the damping gap regions (10, 11) are in the form of parallel gaps and are of a gap thickness (D) which constitutes a maximum of 2 % and preferably less than 1 % of the radius (GR) of the sliding bearing surface of the tilting segments (3).

4. A radial sliding bearing according to one of claims 1 to 3 characterised in that the segment passage (13) is of a slot-like cross-section extended over the width of the tilting segments (3) and terminates in a plurality of lubricant outlet bores (14) which open into the transverse lubricant feed groove (6) and that the lubricant feed opening (9) is adapted to the cross-section of the segment passage (13).

5. A radial sliding bearing according to one of claims 1 to 4 characterised in that the tilting projection portions (8) and the tilting segment (3) are formed as a unitary component.

Fig. 2

Fig. 1

EP 0 269 647 B1

Fig. 3

Fig. 4

2